# EUROPÄISCHE PATENTSCHRIFT

(11) **EP 2 732 685 B1**
(45) Veröffentlichungstag und Bekanntmachung des Hinweises auf die Patenterteilung: **01.06.2016**
(21) Anmeldenummer: 12193156.2
(22) Anmeldetag: 19.11.2012
(51) Int. Cl.: A01C 5/06

(54) **Doppelscheibenschar einer landwirtschaftlichen Maschine, insbesondere einer Sämaschine**
Double disc share of an agricultural machine, in particular a sowing machine
Soc à double disque d'une machine agricole, notamment un semoir

(43) Veröffentlichungstag der Anmeldung: 21.05.2014
(73) Patentinhaber: Horsch Maschinen GmbH, 92421 Schwandorf (DE)
(72) Erfinder: Köbler, Manfred, 93155 Hemau (DE); Haselhoff, Alexander, 92421 Schwandorf (DE)
(74) Vertreter: Benninger, Johannes

(56) Entgegenhaltungen:
- EP-A1- 0 914 763
- DE-T5-112006 000 927
- GB-A- 2 146 211

## Beschreibung

Die vorliegende Erfindung betrifft ein Doppelscheibenschar einer landwirtschaftlichen Maschine zum Ausbringen von Saatgut und/oder Düngemittel mit den Merkmalen des unabhängigen Anspruchs 1.

Insbesondere befasst sich die Erfindung mit der Montage von Schar- bzw. Sechscheiben eines Doppelscheibenschars, wie es bspw. in landwirtschaftlichen Gerätekombinationen wie Drillmaschinen oder Drill- und/oder Düngerkombinationen eingesetzt wird. Ein derartiges Doppelscheibenschar ist bspw. durch die DE 10 2010 037 240 A1 oder auch durch die EP 0 140 264 A2 bekannt.

Bekannte Doppelscheibenschare weisen paarweise und V-förmig angeordnete Scharscheiben auf, die furchenbildend arbeiten. Solche Anordnungen mit jeweils V-förmig zueinander angestellten Scharscheiben oder Sechscheiben sind aus der US 3 507 233 A, aus der US 1 286 268 A, aus der US 1 095 798 sowie aus der FR 24 13 864 A1 bekannt. Die Ablage von Saatgut und/oder Dünger erfolgt i.d.R. über eine zwischen den Scheiben mündende Leitung.

Die zwei V-förmig angeordneten bzw. angestellten Scharscheiben sind typischerweise an einer Drehlagerung befestigt und gelagert. Diese Drehlagerung kann an einem Befestigungselement in einer Weise montiert sein, dass sich die Scharscheiben in Fahrtrichtung annähernd auf gleicher Höhe befinden. Durch die V-förmige Anordnung der Scharscheiben berühren sich diese an einem gemeinsamen Punkt. Die Befestigung und Lagerung der Scharscheiben ist meist so gestaltet, dass an dem gemeinsamen Kontaktpunkt der Scharscheiben eine gewisse Vorspann- bzw. Querkraft herrscht, mit der die Scheiben in ihrem Kontaktpunkt aneinander gedrückt sind.

Neben den erwähnten Scheibenpaaren mit symmetrischer Scheibenanordnung sind Varianten mit unterschiedlich dimensionierten Scheiben eines Scheibenpaares bekannt, so bspw. aus der DE 698 11 822 T2. Dort ist eine Anordnung mit einer größeren Hauptscheibe und einer kleineren Zusatzscheibe offenbart, wobei die äußere Umfangskante der Zusatzscheibe auf einem Abschnitt innerhalb der konkaven Innenseite der nach außen konvex gewölbten Hauptscheibe berührend und unter definierbarer Vorspannung abwälzt. Eine elastische Lagerung der Zusatzscheibe ermöglicht es dieser, sich von der Hauptscheibe abzuheben.

Die US 3 058 531 A offenbart eine weitere Doppelscheibenanordnung einer Mulcheinrichtung, bei der zwei unterschiedlich große Scheiben V-förmig angestellt sind. Die kleinere Scheibe ist in einer Weise mittels einer Feder gegen die größere Scheibe gespannt, dass sie zur Vermeidung von Beschädigungen bei auftretenden Bodenwiderständen ausweichen kann.

Diese bei den verschiedenen Varianten von Scharanordnungen mit V-förmig angestellten Doppelscheiben erzeugten Vorspannkräfte an den Kontaktstellen der Scheiben haben einerseits den Vorteil, dass sich die Scharscheiben gegenseitig antreiben. Zudem können sich die Scharscheiben aneinander und gegenseitig abstützen, wodurch die beiden Scharscheiben die auf das Doppelscheibenschar wirkenden Kräfte, die bspw. durch den Schardruck oder durch Steinschläge o. dergl. entstehen, gemeinsam aufnehmen können. Auf diese Weise wirken auf die jeweiligen Drehlagerungen jeweils deutlich geringere Kräfte als bei Verwendung nur einer Scheibe oder bei sich nicht berührenden oder gegenseitig abstützenden Doppelscheiben. Die resultierenden Kräfte und die daraus folgenden mechanischen Belastungen können durch diese Anordnung stark reduziert werden, wodurch sich eine deutlich höhere Standzeit der Bauteile und insbesondere der Lagerungen erzielen lässt.

Ein Problem aller bekannten Doppelscheibenanordnungen mit gegeneinander vorgespannten Scheiben besteht darin, dass bei allmählichem Verschleiß der Scharscheiben, d.h. wenn sich der Außendurchmesser der Scharscheiben verringert, die Vorspannkraft geringer wird bzw. dass sich ab einem gewissen Grad des Verschleißes die Scharscheiben nicht mehr berühren. Um diesem Nachteil abzuhelfen oder entgegenzuwirken wurden bislang bspw. zwischen der jeweiligen Drehlagerung der Scheibe und dem Befestigungselement Distanzscheiben unterschiedlicher Dicke oder eine variable Anzahl von Distanzscheiben beigelegt. Durch diese Distanzscheiben kann einerseits die Vorspannkraft eingestellt werden. Zudem können einzelne Distanzscheiben bei einem Verschleiß der Scharscheiben entnommen werden, so dass es auch bei Verschleiß der Scharscheiben weiterhin möglich ist, eine Vorspannkraft aufrechtzuerhalten. Allerdings ist die Justierung der Vorspannkräfte mittels Distanzscheiben sehr zeit- und wartungsintensiv, da bei jedem Justierungsvorgang jeweils alle Scharscheiben und Drehlagerungen demontiert werden müssen, um die Distanzscheiben zu entnehmen oder weitere Distanzscheiben einzufügen. Darüber hinaus ist mit einer solchen Methode die Nachstellung der Scharscheiben nur bis zu einem gewissen Verschleißgrad möglich.

Ein weiterer Lösungsansatz, der dem Verschleiß der Scharscheiben entgegen wirken soll, besteht darin, die Scharscheiben in Fahrtrichtung zu versetzen, wie es bspw. auch durch die o.g. Dokumente mit unterschiedlich großen Scheiben offenbart ist. Allerdings tritt bei solchen Anordnungen das Problem auf, dass die in Fahrtrichtung vorne laufende Scharscheibe die Hauptschneide- bzw. -schlitzarbeit verrichten muss und dadurch deutlich schneller verschleißt als die hintere Scheibe. Außerdem müssen bei dieser Konfiguration die Drehlagerungen der einzelnen Scharscheiben die auftretenden Kräfte weitgehend allein aufnehmen, da den beiden Scharscheiben der direkte gemeinsame Kontaktpunkt und damit eine gegenseitige Abstützmöglichkeit fehlen.

Die DE 11 2006 000 927 T5 offenbart eine Doppelscheibenscharanordnung mit V-förmig zueinander angestellten Scharscheiben, die mit elastischer Vorspannung zueinander gelagert sind, um unter unterschiedlichen Betriebsbedingungen sowie bei betriebsbedingtem Scheibenverschleiß und der damit einhergehenden Durchmesserreduzierung der Scheiben einen definierten Kontakt der beiden Scheiben aufrechterhalten zu können.

Ein Ziel der vorliegenden Erfindung besteht in einer vereinfachten Montage- und Wartungsmöglichkeit für die Scharscheiben eines Doppelscheibenschares. Ein weiteres Ziel der Erfindung besteht darin, bei einem Doppelscheibenschar unter unterschiedlichen Betriebsbedingungen wie auch bei stärkerem Verschleiß der Scharscheiben eine Mindestvorspannkraft der gegeneinander verspannten Scheiben gewährleisten zu können. Diese Mindestvorspannkraft soll mit möglichst wenig Bauaufwand, mit möglichst wenigen mechanischen Teilen und zudem mit möglichst geringer Verschmutzungsanfälligkeit und minimiertem Verschleiß realisierbar sein.

Diese Ziele der Erfindung werden mit dem Gegenstand des unabhängigen Patentanspruchs erreicht. Merkmale vorteilhafter Weiterbildungen der Erfindung ergeben sich aus den abhängigen Ansprüchen. So schlägt die Erfindung zur Erreichung des genannten Ziels eine Scharanordnung mit einem Doppelscheibenschar zur Bodenbearbeitung in der Landwirtschaft vor, bei der die Befestigungselemente der Drehlagerungen für die beiden V-förmig angestellten Scharscheiben nicht mehr wie bisher als starres Element ausgeführt sind, sondern dass das Befestigungselement federnd bzw. elastisch ausgeführt wird. Diese federnde bzw. elastische Anordnung der Scharscheiben schließt ausdrücklich auch solche Varianten ein, bei denen eine der beiden Scheiben starr gelagert ist, während die jeweils andere Scheibe über die erfindungsgemäße elastische bzw. federnde Lagerung verfügt. Die Anordnung der beiden Scheiben kann wahlweise streng symmetrisch zur Längsachse bzw. Bewegungsrichtung ausgebildet sein. Die Erfindung bezieht sich jedoch gleichermaßen auf eine Anordnung, bei der die Scheiben in Längsrichtung versetzt zueinander angeordnet sind, so dass ein Kontaktpunkt oder Kontaktbereich der beiden Scheiben nicht exakt an deren äußeren Rändern liegt, sondern in einem Bereich einer Schräge der nach vorne versetzten Scheibe mit dem äußeren Rand- oder Umfangsbereich der nach hinten versetzten Scheibe.

Das bedeutet, dass sich die Scharscheiben quer zueinander bewegen können. Das federnde Befestigungselement ist konstruktiv so gestaltet, dass die Bewegung ohne zusätzlichen Drehpunkt erfolgt, d.h. dass die Bewegung allein aufgrund der Materialeigenschaften und der geometrischen Gestaltung des federnden Befestigungselementes ermöglicht ist. Weiterhin kann dieses Befestigungselement so ausgelegt sein, dass unabhängig vom Verschleißgrad der Scharscheiben immer eine ausreichende Vorspannkraft zwischen den V-förmig angeordneten Scharscheiben vorhanden ist. Ein besonderer Vorteil des erfindungsgemäßen Befestigungselements besteht darin, dass keine verschleißträchtige und verschmutzungsanfällige Drehlagerung benötigt wird, sondern dass sich der gewünschte Effekt durch die konstruktive Auslegung des Befestigungselements erreichen lässt.

Es sei an dieser Stelle erwähnt, dass die Scharscheiben normalerweise mit einer Vorspannung gegeneinander gedrückt sind, wobei diese Vorspannung auch bei allmählich verschleißenden Scheiben und abnehmendem Umfang der Scheiben aufrechterhalten bleibt, ohne dass sich die Vorspannkräfte exakt definieren lassen. Eine exakte Vorgabe der Vorspannkräfte ist in der Praxis nicht notwendig, da es genügt, wenn die Scharscheiben auch bei unterschiedlichen Betriebsbedingungen zuverlässig aneinander gedrückt werden.

Die Ausgestaltung des federnden Befestigungselements kann auf vielfältige Weise ausfallen. So ist es bspw. denkbar, dass das Befestigungselement als geschlitzter Klotz ausgeführt ist. Auch ist es denkbar, dass das Befestigungselement als U-förmiges Blech gestaltet wird. Das federnde Element ist vorzugsweise aus einem metallischen Werkstoff, kann jedoch auch aus Nichteisen-Materialien mit vergleichbaren Eigenschaften gefertigt sein. Um Einzelteile zu sparen, kann das federnde Befestigungselement auch in einer Weise ausgestaltet sein, dass es bspw. Gewindebohrungen enthält, mit welchen die Drehlagerungen direkt angeschraubt werden können. Ebenso ist es denkbar, dass entweder beide Scharscheiben oder nur jeweils eine Scharscheibe federnd befestigt wird, d. h. dass das federnde Befestigungselement entweder so gestaltet ist, dass es sich nach beiden Seiten bewegen kann oder das sich dieses nur in eine Richtung bewegen kann.

Darüber hinaus ist es denkbar, die Erfindung bei Doppelscheibenscharen einzusetzen, bei denen die Scharscheiben in Fahrtrichtung zueinander versetzt sind. Auch wäre es denkbar, die Erfindung bei Scharen zu verwenden, die nicht als Doppelscheibenschare ausgeführt sind.

Zur Erreichung des oben genannten Ziels der Erfindung wird eine Doppelscheibenscharanordnung einer landwirtschaftlichen Maschine zum Ausbringen von Saatgut und/oder Düngemittel vorgeschlagen, die insbesondere Teil einer Sämaschine oder Säkombination sein kann. Die erfindungsgemäße Scharanordnung bzw. Doppelscheibenschar weist zwei V-förmig und ungefähr symmetrisch zueinander angeordnete Scharscheiben auf, die an einem mit einem Schartragarm verbundenen Befestigungselement jeweils drehbar gelagert sind und auf diese Weise ein Doppelscheibenschar ausbilden. Die Erfindung bezieht sich auf das elastische Eigenschaften aufweisende Befestigungselement, das die V-förmig zueinander angeordneten Schar- oder Sechscheiben mit einer Vorspannung an einem im Boden oder oberhalb der Bodenoberfläche laufenden und/oder eine Furche bildenden Kontaktpunkt oder Kontaktbereich am jeweiligen Außenumfang bzw. am Kontaktpunkt bei versetzt zueinander laufenden Scheiben aneinander drückt. Die Erfindung ist gekennzeichnet durch das Befestigungselement, das einstückig ausgebildet ist. Es definiert die Vorspannung der V-förmig zueinander angestellten Schar- oder Sechscheiben, und zwar auch nach längerer Betriebsdauer und nach verschleißbedingter Formänderung der Scharscheiben, die bspw. aufgrund eines unvermeidlichen Verschleißes im Durchmesser kleiner werden und/oder in ihrer Dicke abnehmen.

Erfindungsgemäß weist die Scharanordnung ein einstückig ausgebildetes Befestigungselement auf, dessen Konturen und elastische Eigenschaften die Vorspannkräfte der V-förmig angestellten Scharscheiben des Doppelscheibenschares definieren. Im Idealfall bleiben die gewünschten Vorspannkräfte bei verschleißbedingter Durchmesser- und/oder Breitenreduzierung der Scheiben aufrechterhalten und/oder zumindest annähernd konstant. Das federnde und/oder elastische Vorspannkräfte ausbildende Befestigungselement kann bspw. als geschlitzter Klotz und/oder als Blechteil oder Kunststoffteil o. dgl. ausgebildet sein.

Eine bevorzugte Ausführungsvariante der erfindungsgemäßen Scharanordnung sieht vor, dass das Befestigungselement wenigstens drei funktionelle, miteinander verbundene Abschnitte aufweist, die durch einen Befestigungsabschnitt zur Verbindung mit einem Schartragarm oder einem Verbindungsträger o. dgl. sowie zwei ungefähr symmetrisch ausgebildete, am Befestigungsabschnitt mündende, durch einen Schlitz oder Spalt voneinander getrennte und die Lagersitze für die Drehlagerungen der Scheiben aufweisende Flügel gebildet sind. Dabei können die beiden Flügel und/oder deren Übergangsbereich zum Befestigungsabschnitt des Befestigungselements eine elastische Verformbarkeit zur Erzielung der definierten Vorspannkraft aufweisen. Wie erwähnt, ist das Befestigungselement einstückig ausgebildet. Besonders geeignet können in diesem Zusammenhang Kunststoff-Verbundbauteile sein, bei denen die elastischen Eigenschaften an bestimmten Stellen gezielt beeinflussbar und variabel sind.

Bei der Scharanordnung kann zumindest eine der Scheiben dadurch federnd gelagert sein, dass die elastischen Eigenschaften des Befestigungselements bzw. dessen beider Flügel unterschiedlich ausgebildet sind. Auch kann vorgesehen sein, dass das federnde Befestigungselement derart ausgebildet und gestaltet ist, dass die Scharscheiben einen gemeinsamen Kontaktpunkt aufweisen und an diesem eine Vorspannkraft bzw. eine Querkraft herrscht. Wahlweise kann in dem federnden Befestigungselement bzw. in dessen beiden Flügeln jeweils ein Gewinde, ein eingepresster Lagersitz oder eine andere geeignete Befestigung zur Halterung der Drehlagerungen der Scheiben vorgesehen sein.

Ein besonderer Vorteil der erfindungsgemäßen Scharanordnung besteht wie erwähnt darin, dass sich die Scharscheiben quer zur Fahrtrichtung des Doppelscheibenschares zueinander bewegen können, wodurch eine selbstständige Nachstellung der Vorspannkraft bzw. des Abstandes der Scharscheiben bei Verschleiß der Scheiben erreicht wird. Diese Nachstellung wird ohne zusätzlichen Drehpunkt erreicht, sondern nur durch die Materialeigenschaften und die konstruktive Gestaltung dieses federnden Befestigungselementes. D.h., es wird auf gelenkige oder drehgelenkige Lagerungen und zusätzliche Federelemente verzichtet, welche die Scharscheiben aneinander drücken, da alle diese konstruktiven Maßnahmen verschmutzungs-, verschleiß- und defektanfällig sind. Dem gegenüber weist das elastische Befestigungselement keinen nennenswerten Verschleiß auf. Seine Funktion wird durch anhaftenden Schmutz nicht beeinträchtigt; zudem sind keine Defekte zu befürchten, da es keine bewegten Teile gibt.

Das federnde Befestigungselement kann so gestaltet sein, dass die Scharscheiben einen gemeinsamen Kontaktpunkt aufweisen, wobei an diesem Kontaktpunkt eine Vorspannkraft bzw. eine Querkraft herrscht.

Anhand der vorstehenden Beschreibung konnte verdeutlicht werden, dass das formulierte Ziel der vorliegenden Erfindung, die vereinfachte Montagemöglichkeit für die Scharscheiben des Doppelscheibenschares erreicht werden kann. Zudem kann auch die Wartung des Doppelscheibenschares vereinfacht und sichergestellt werden, da die Erfindung dafür sorgen kann, dass die Scharscheiben unabhängig vom Verschleißgrad immer eine gewisse Vorspannkraft zueinander aufweisen. Ferner kann dadurch eine erhöhte Standzeit der Drehlagerungen der Scharscheiben bzw. des Doppelscheibenschares erreicht werden. Auch werden weniger Einzelteile zur Montage benötigt als dies bisher der Fall war.

Im Folgenden sollen Ausführungsbeispiele die Erfindung und ihre Vorteile anhand der beigefügten Figuren näher erläutern. Weitere Merkmale, Ziele und Vorteile der vorliegenden Erfindung gehen aus der nun folgenden detaillierten Beschreibung einer Ausführungsform der Erfindung hervor, die als nicht einschränkendes Beispiel dient und auf die beigefügten Zeichnungen Bezug nimmt.
Fig. 1 zeigt eine schematische Perspektivansicht einer Ausführungsvariante einer erfindungsgemäßen Scharanordnung mit einem Doppelscheibenschar.
Fig. 2 zeigt eine schematische Seitenansicht der Scharanordnung gemäß Fig. 1 (links) und eine Schnittansicht entlang der Schnittlinie II-II (rechts).
Fig. 3 zeigt in zwei schematischen Darstellungen eine Ausführungsvariante eines elastisch federnden Befestigungselementes, das als Aufhängungsteil für die V-förmig zueinander angestellten Scharscheiben der erfindungsgemäßen Scharanordnung fungiert.
Fig. 4 zeigt eine schematische Perspektivansicht der erfindungsgemäßen Scharanordnung gemäß Fig. 1, bei der jedoch die beiden Scharscheiben stark verschlissen sind.
Fig. 5 zeigt eine schematische Seitenansicht der Scharanordnung gemäß Fig. 4 (links) und eine Schnittansicht entlang der Schnittlinie V-V (rechts).

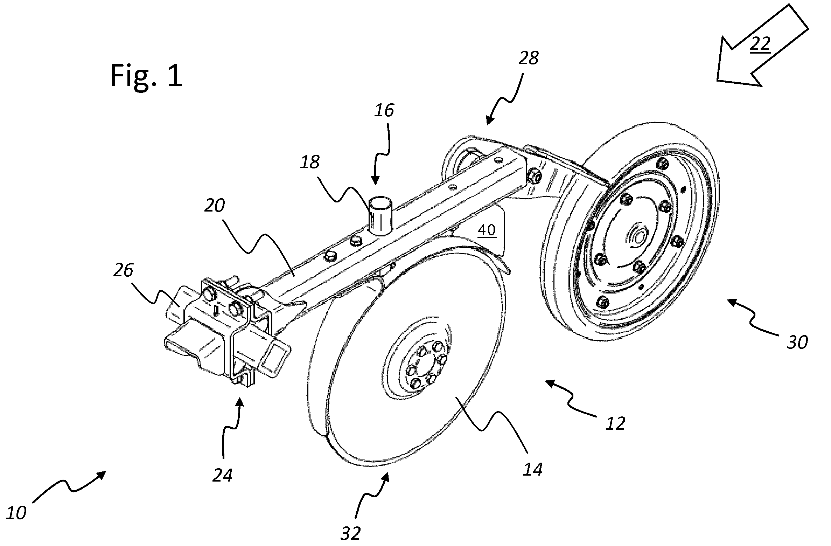

Für gleiche oder gleich wirkende Elemente der Erfindung werden in den Figuren 1 bis 5 jeweils gleiche Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Scharanordnung ausgestaltet sein kann und stellen keine abschließende Begrenzung dar.

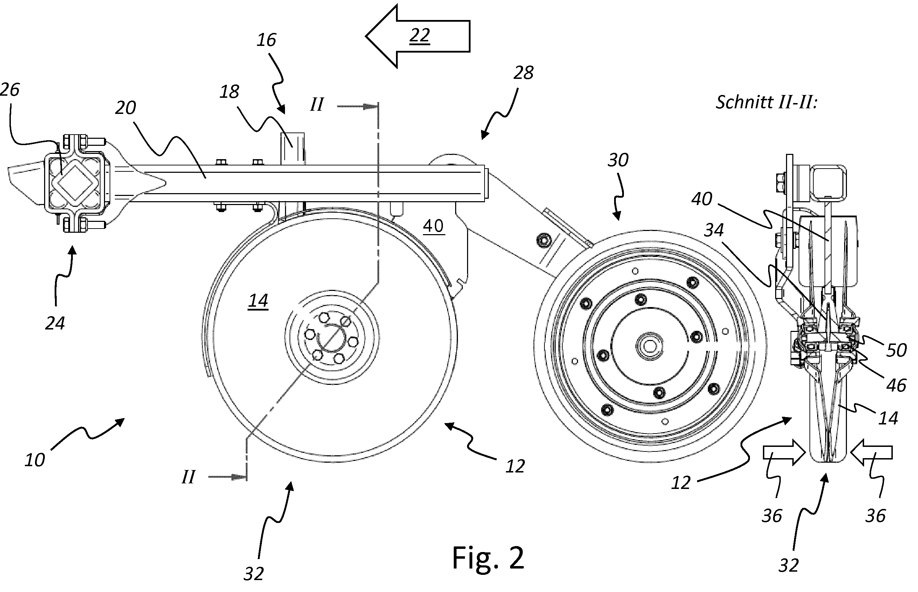

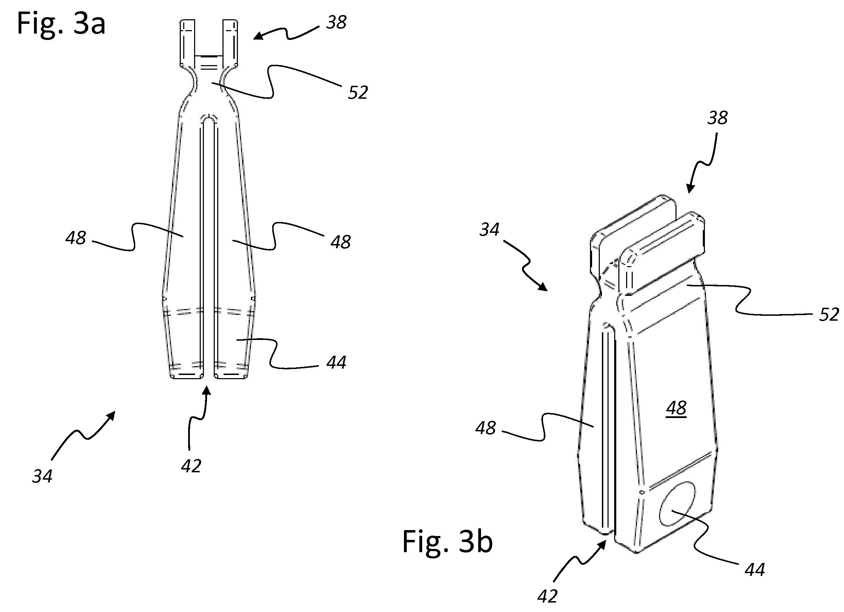

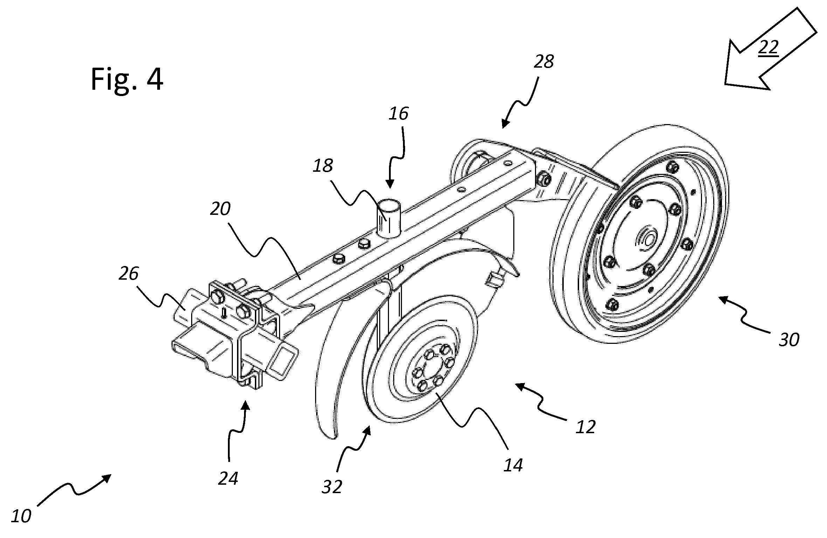

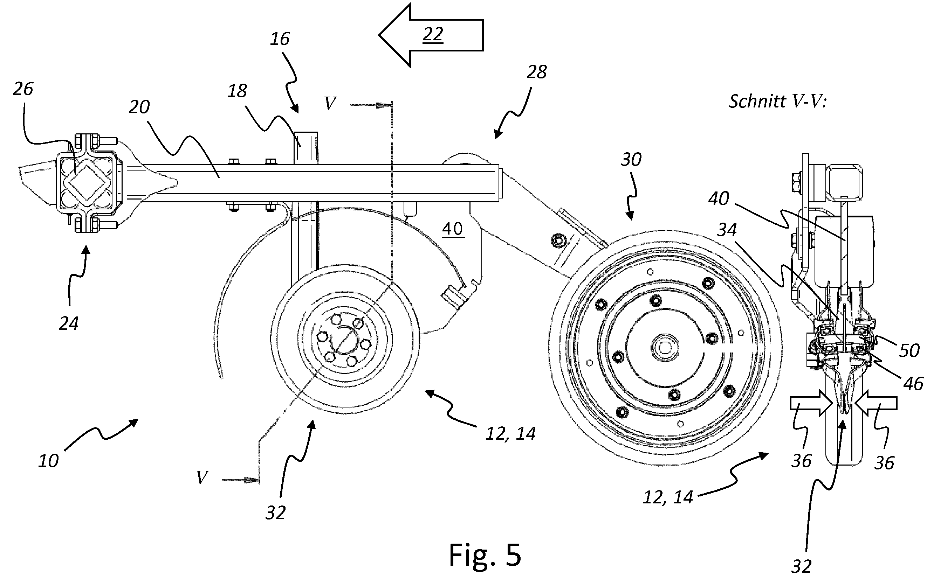

Anhand der schematischen Perspektivdarstellungen der Figuren 1 und 4, der schematischen Seitenansichten der Figuren 2 und 5 (mit den zugehörigen Schnittansichten) sowie der beiden Darstellungen der Fig. 3 sollen der Aufbau und die grundsätzliche Funktionsweise eines Ausführungsbeispiels der erfindungsgemäßen Scharanordnung verdeutlicht werden, die bspw. Teil eines gezogenen landwirtschaftlichen Gerätes wie eines Sägerätes oder einer Säkombination sein kann.

So verdeutlich die Fig. 1 in einer schematischen Perspektivansicht eine Ausführungsvariante einer erfindungsgemäßen Scharanordnung 10 mit einem Doppelscheibenschar 12, die durch zwei V-förmig angestellte Schar- oder Sechscheiben 14 gebildet ist, die jeweils drehbar an einem hier nicht sichtbaren Befestigungselement 34 (vgl. Fig. 3) gelagert sind, das über eine Halterung an einem horizontalen Längsträger 20 befestigt ist. Der als stabiles Vierkantrohr ausgebildete horizontale Längsträger 20 ist mit seiner vorderen Stirnseite (in Fahrtrichtung 22 gesehen) über eine stabile Klemmverbindung 24 an einem Querträger 26 gehalten und fixiert. Der Querträger 26 kann bspw. Teil eines Maschinenrahmens sein und mehrere solcher Scharanordnungen 10 aufweisen, die jeweils in regelmäßigen Abständen parallel nebeneinander angeordnet sein können. Da die gezeigte Scharanordnung 10 typischerweise Teil einer Sämaschine oder Säkombination ist, mündet zwischen den beiden V-förmig angestellten Säscheiben 14 ein Saatleitungsrohr 18, durch welches das Saatgut oder auch granulatartiger oder flüssiger Dünger in die durch das Doppelscheibenschar 12 in den Boden eingebrachte Säfurche (nicht gezeigt) abgegeben werden kann. Eine an der rückseitigen Stirnseite des Längsträgers 20 über eine starre oder drehbar einstellbare Lagerung 28 geführte Druckrolle 30 sorgt für das Schließen der Furche, für das Andrücken des Saatgutes und/oder des Düngers sowie normalerweise für eine Tiefenführung der Scharanordnung 10.

Wie es die Erfindung vorsieht, sind die beiden Scharscheiben 14 des Doppelscheibenschar 12 in einer Weise V-förmig angestellt, dass sich die Scheiben 14 mit ihren zueinander weisenden Außenkanten ihres äußeren Scheibenumfangs im Bereich der Saatfurche berühren und dass diese Berührung durch eine Vorspannung der Drehlagerungen 46 der beiden Scheiben 14 unterstützt ist. Um dies zu erreichen, befindet sich an einer Unterseite eines Verbindungträgers 40 ein in der Fig. 1 nicht erkennbares Befestigungselement 34 mit elastischen Eigenschaften, welches die V-förmig zueinander angeordneten Schar- oder Sechscheiben 14 mit Vorspannung an einem im Boden oder in Bodennähe laufenden und eine Furche bildenden Kontaktpunkt oder Kontaktbereich 32 am jeweiligen Außenumfang (bei symmetrisch nebeneinander laufenden Scheiben 14) aneinander drückt.

Es sei in diesem Zusammenhang darauf hingewiesen, dass der Kontaktpunkt nicht zwingend im Boden laufen muss, sondern auch über dem Bodenniveau liegen kann. Die Höhe des Kontaktpunktes der beiden Scharscheiben hängt davon ab, in welcher Ablagetiefe das Saatgut in den Boden eingebracht werden soll. Es sei zudem darauf hingewiesen, dass der Kontaktpunkt keinesfalls am Außenumfang beider Scheiben 14 liegen muss. Da auch Konfigurationen möglich und vom Erfindungsgedanken umfasst sind, bei denen die beiden Scheiben 14 in Bewegungsrichtung der Maschine leicht versetzt zueinander angeordnet sind, befindet sich der Kontaktpunkt hinsichtlich der hinteren Scheibe 14 zwar an deren Außenumfang, liegt jedoch bei der vorderen Scheibe 14 innerhalb deren Außenumfangs, an ihrer (flachen oder konkav gewölbten) Innenseite.

Die Fig. 2 zeigt links eine schematische Seitenansicht der Scharanordnung 10 gemäß Fig. 1 und rechts eine Schnittansicht entlang der Schnittlinie II-II. Dort sind einige zuvor nicht erkennbare Einzelheiten verdeutlicht, so bspw. das einstückig ausgebildete Befestigungselement 34, das in den Ansichten der Fig. 3 noch detaillierter erläutert ist. Die Gestaltung und die Konturen sowie die elastischen Eigenschaften des einstückig ausgebildeten und elastisch verformbaren Befestigungselements 34 definieren die gegensinnig wirkenden Vorspannkräfte 36 der V-förmig angestellten Scheiben 14 des Doppelscheibenschars 12 an ihrem unteren, im Boden im Bereich der Furche oder oberhalb des Bodenniveaus befindlichen Kontaktpunkt oder Kontaktbereich 32. Die Gestaltung der Drehlagerung für das Doppelscheibenschar 12 und des Befestigungselements 34 sieht vor, dass die Vorspannkräfte bei verschleißbedingter Durchmesserreduzierung (ggf. auch Breitenreduzierung) der Scharscheiben 14 (vgl. Fig. 4 und Fig. 5) aufrechterhalten werden und/oder zumindest annähernd konstant bleiben.

Wie es die schematische Draufsicht der Fig. 3a und die perspektivische Ansicht der Fig. 3b beispielhaft verdeutlichen, kann das federnde und/oder elastische Vorspannkräfte ausbildende Befestigungselement 34 bspw. als geschlitzter Klotz und/oder als Blechteil ausgebildet sein. Es sei an dieser Stelle jedoch ausdrücklich betont, dass das Befestigungselement 34 auch anders als dargestellt ausgebildet und dimensioniert sein kann. Die beispielhaften Darstellungen der Fig. 3 stellen somit keine Einschränkungen hinsichtlich der Gestaltung dar, sondern zeigen lediglich eine von zahlreichen möglichen Ausführungsvarianten des Befestigungselements 34 und seine Funktionselemente.

Wie es die Darstellungen der Fig. 3 erkennen lassen, weist das Befestigungselement 34 im Wesentlichen drei funktionelle, miteinander verbundene Abschnitte auf, die durch einen Befestigungsabschnitt 38 zur Verbindung mit einem Schartragarm oder einem in Fig. 2 angedeuteten Verbindungsträger 40 sowie zwei ungefähr symmetrisch ausgebildete, am Befestigungsabschnitt 38 mündende, durch einen Schlitz oder Spalt 42 voneinander getrennte und die Lagersitze 44 für die Drehlagerungen 46 der Scheiben 14 aufweisende Flügel 48 gebildet sind. Wie es die Fig. 2 erkennen lässt, können die Drehlagerungen 46 insbesondere als Wälzlagerungen ausgebildet sein, bei denen kurze Achsstummel 50 in die Lagersitze 44 der Flügel 48 eingepresst sein können. Auf diesen Achsstummeln 50 sitzen jeweils Innenringe von Wälzlagern, deren Außenringe die Scheiben 14 tragen. Die zueinander geneigten Bohrungsverläufe der symmetrisch ausgebildeten Lagersitze 44 zur Aufnahme der Achsstummel 50 sorgen für die gewünschte winkelige, V-förmige Anstellung der beiden Scheiben 14, wie es in der Schnittdarstellung der Fig. 2 deutlich erkennbar ist.

Die beiden Flügel 48 und/oder deren Übergangsbereich 52 zum Befestigungsabschnitt 38 des Befestigungselements 34 weist eine elastische Verformbarkeit zur Erzielung der definierten Vorspannkräfte 36 (vgl. Fig. 2) auf. Um dies zu erreichen, kann das Befestigungselement 34 bspw. aus einem elastischen Kunststoff oder Verbundbauteil einstückig ausgebildet sein. Auch ein metallenes Befestigungselement 34 kann sinnvoll eingesetzt werden, sofern es die entsprechenden elastischen Eigenschaften aufweist, die für die Realisierung der Erfindung erforderlich sind. Das als tragendes Aufhängungsteil fungierende Befestigungselement 34 ist so auszulegen und zu formen, dass die Scheiben 14 entsprechend Fig. 2 mit ihren unteren Kanten aneinander gedrückt werden, was ein Auseinanderdrücken der beiden durch den Spalt 42 voneinander getrennten elastischen bzw. elastisch gelagerten Flügel 48 bedingt. Bei funktionsgerechter Gestaltung des Befestigungselements 34 kann dieses sogar einen starken Verschleiß der Scheiben 14 ausgleichen, wie er durch eine erhebliche Reduzierung der Durchmesser der beiden Scheiben 14 gemäß Fig. 4 sowie Fig. 5 verdeutlicht ist. Selbst bei solchermaßen verschlissenen Scheiben 14 können die Vorspannkräfte 36 noch ausreichen, um in Zusammenhang mit einer geeigneten Nachjustierung der nachlaufenden Druckrolle 30 für eine zufriedenstellende Furchenbildung zu sorgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 10: Scharanordnung
- 12: Doppelscheibenschar
- 14: Scheiben, Scharscheibe, Sechscheibe
- 16: Halterung
- 18: Rohrabschnitt
- 20: Längsträger
- 22: Fahrtrichtung
- 24: Klemmverbindung
- 26: Querträger
- 28: Lagerung
- 30: Druckrolle
- 32: Kontaktbereich, Kontaktpunkt
- 34: Befestigungselement
- 36: Vorspannkräfte
- 38: Befestigungsabschnitt
- 40: Verbindungsträger
- 42: Schlitz, Spalt
- 44: Lagersitz
- 46: Drehlagerung
- 48: Flügel
- 50: Achsstummel
- 52: Übergangsbereich

## Patentansprüche

1. Scharanordnung (10) einer landwirtschaftlichen Maschine zum Ausbringen von Saatgut und/oder Düngemittel, insbesondere einer Sämaschine oder Säkombination, mit zwei V-förmig zueinander angeordneten, an einem mit einem Schartragarm oder Längsträger (20) verbundenen, elastische Eigenschaften aufweisenden Befestigungselement (34), jeweils drehbar gelagerten Scharscheiben (14) zur Ausbildung eines Doppelscheibenschars (12), wobei das elastische Eigenschaften aufweisende Befestigungselement (34) die V-förmig zueinander angeordneten Schar- oder Sechscheiben (14) mit einer Vorspannung (36) an einem im oder auf dem Boden laufenden und eine Furche bildenden Kontaktpunkt oder Kontaktbereich (32) am jeweiligen Außenumfang bzw. am Außenumfang mindestens einer der Schar- oder Sechscheiben (14) aneinander drückt, wobei seine Konturen und elastischen Materialeigenschaften die Vorspannkräfte (36) der V-förmig angestellten Scheiben (14) des Doppelscheibenschars (12) definieren, **dadurch gekennzeichnet, dass** das Befestigungselement(34) einstückig ausgebildet ist.

2. Scharanordnung nach Anspruch 1, bei der die Vorspannkräfte (36) bei verschleißbedingter Durchmesser- und/oder Breitenreduzierung der Scheiben (14) aufrechterhalten und/oder zumindest annähernd konstant bleiben, wobei das elastische Befestigungselement (34) die Vorspannkräfte (36) für die Scheiben (14) bereitstellt.

3. Scharanordnung nach einem der Ansprüche 1 bis 2, bei der das federnde und/oder elastische Vorspannkräfte (36) ausbildende Befestigungselement (34) ein geschlitzter Klotz und/oder ein Blechteil ist.

4. Scharanordnung nach einem der Ansprüche 1 bis 3, bei der das federnde und/oder elastische Vorspannkräfte (36) ausbildende Befestigungselement (34) aus einem elastischen Material wie Kunststoff, Metall oder einem Verbundmaterial gebildet ist.

5. Scharanordnung nach Anspruch 3 oder 4, bei der das Befestigungselement (34) wenigstens drei funktionelle, miteinander verbundene Abschnitte aufweist, die durch einen Befestigungsabschnitt (38) zur Verbindung mit einem Schartragarm oder einem Verbindungsträger (40) sowie zwei ungefähr symmetrisch ausgebildete, am Befestigungsabschnitt (38) mündende, durch einen Schlitz oder Spalt (42) voneinander getrennte und die Lagersitze (44) für die Drehlagerungen (46) der Scheiben (14) aufweisende Flügel (48) gebildet sind.

6. Scharanordnung nach Anspruch 5, bei der die beiden Flügel (48) und/oder deren Übergangsbereich (52) zum Befestigungsabschnitt (38) des Befestigungselements (34) eine elastische Verformbarkeit zur Erzielung der definierten Vorspannkraft (36) aufweisen.

7. Scharanordnung nach einem der Ansprüche 5 bis 6, bei der zumindest eine der Scheiben (14) dadurch federnd gelagert ist, dass die elastischen Eigenschaften des Befestigungselements (34) bzw. dessen beider Flügel (48) unterschiedlich ausgebildet sind.

## Claims

1. A coulter arrangement (10) of an agricultural machine for spreading seeds and/or fertilisers, in particular a sowing machine or sowing combination, with two coulter discs (14), which are each rotatably mounted at a fastening element (34), which is connected to a coulter support arm or to a longitudinal beam (20) and which has elastic characteristics, the two coulter discs (14) being arranged V-shaped in relation to each other to form a double disc coulter (12), wherein the fastening element (34), which has elastic characteristics, presses the coulter discs (14), which are arranged V-shaped in relation to each other, against each other at each outer circumference or at the outer circumference of at least one of the coulter discs (14), as the case may be, with a preload (36) at a contact point or a contact area (32) running in or on the ground and forming a furrow, wherein the contours and elastic material characteristics of the fastening element (34) define the preload forces (36) of the V-shaped arranged discs (14) of the double disc coulter (12), **characterised in that** the fastening element (34) is formed in one piece.

2. The coulter arrangement as recited in claim 1, in which the preload forces (36) are maintained and/or remain at least approximately constant under diameter reduction and/or width reduction of the discs (14) due to wear, wherein the elastic fastening element (34) provides the preload forces (36) for the discs (14).

3. The coulter arrangement as recited in one of the claims 1 to 2, in which the fastening element (34), which develops springy and/or elastic preload forces (36), is a slotted block and/or a sheet metal part.

4. The coulter arrangement as recited in one of the claims 1 to 3, in which the fastening element (34), which develops springy and/or elastic preload forces (36), is formed from an elastic material such as a synthetic material, a metal or a composite material.

5. The coulter arrangement as recited in claim 3 or 4, in which the fastening element (34) has at least three functional sections, which are connected to each other and which are formed by a fastening section (38) for connecting to a coulter support arm or to a crossbeam (40), and two approximately symmetrically formed wings (48) ending in the fastening section (38), which wings (48) are separated from one another by a slit or slot (42), and which wings (48) have the bearing seats (44) for the pivot bearings (46) of the discs (14).

6. The coulter arrangement as recited in claim 5, in which the two wings (48) and/or their transition section (52) to the fastening section (38) of the fastening element (34) have an elastic deformability for achieving the defined preload force (36).

7. The coulter arrangement as recited in one of the claims 5 to 6, in which at least one of the discs (14) is springily mounted by way of the elastic characteristics of the fastening element (34) or of its two wings (48), as the case may be, being differently formed.

## Revendications

1. Ensemble de soc (10) d'une machine agricole destiné à l'épandage de semences et/ou d'engrais, en particulier d'un semoir ou d'une combinaison à semer, comprenant deux disques de soc (14) pour la réalisation d'un soc double disque (12) qui sont disposés en V l'un par rapport à l'autre et logés chacun à rotation sur un élément de fixation (34) relié à un bras support de soc ou à un longeron (20) et présentant des propriétés élastiques, dans lequel ledit élément de fixation (34) présentant des propriétés élastiques presse l'un contre l'autre, avec une précontrainte (36), les disques de soc ou de coutre (14) disposés en V sur un point de contact ou une zone de contact (32) se déplaçant dans ou sur le sol et formant un sillon et situé(e) sur la circonférence extérieure respective ou bien sur la circonférence extérieure de l'un au moins des disques de soc ou de coutre (14), les contours et les propriétés de matière élastiques de celui-ci définissant les forces de précontrainte (36) des disques (14) disposés en V du soc double disque (12), **caractérisé par le fait que** ledit élément de fixation (34) est réalisé d'un seul tenant.

2. Ensemble de soc selon la revendication 1, dans lequel, dans le cas d'une réduction de diamètre et/ou de largeur des disques (14) qui est due à l'usure, les forces de précontrainte (36) sont maintenues et/ou restent constantes au moins approximativement, ledit élément de fixation (34) élastique fournissant les forces de précontrainte (36) pour les disques (14).

3. Ensemble de soc selon l'une quelconque des revendications 1 à 2, dans lequel ledit élément de fixation (34) faisant ressort et/ou réalisant des forces de précontrainte (36) élastiques est un bloc fendu et/ou une pièce en tôle.

4. Ensemble de soc selon l'une quelconque des revendications 1 à 3, dans lequel ledit élément de fixation (34) faisant ressort et/ou réalisant des forces de précontrainte (36) élastiques est fait dans une matière élastique telle que la matière plastique, en métal ou dans un matériau composite.

5. Ensemble de soc selon la revendication 3 ou 4, dans lequel ledit élément de fixation (34) présente au moins trois portions fonctionnelles reliées entre elles qui sont formées par une portion de fixation (38) pour la liaison à un bras support de soc ou à un support de liaison (40) ainsi que par deux ailes (48) réalisées de manière à peu près symétrique, débouchant sur ladite portion de fixation (38), séparées l'une de l'autre par une fente ou lacune (42) et présentant les sièges de palier (44) pour les paliers rotatifs (46) des disques (14).

6. Ensemble de soc selon la revendication 5, dans lequel les deux ailes (48) et/ou leur zone de transition (52) à ladite portion de fixation (38) de l'élément de fixation (34) présentent une déformabilité élastique pour obtenir la force de précontrainte (36) définie.

7. Ensemble de soc selon l'une quelconque des revendications 5 à 6, dans lequel l'un au moins des disques (14) est logé élastiquement par le fait que les propriétés élastiques de l'élément de fixation (34) ou bien des deux ailes (48) de celui-ci sont réalisées de manière différente.
